# EUROPÄISCHE PATENTANMELDUNG

(11) **EP 1 416 173 A1**
(43) Veröffentlichungstag der Anmeldung: **06.05.2004**
(21) Anmeldenummer: 03022764.9
(22) Anmeldetag: 10.10.2003
(51) Int. Cl.: F16B 37/04

(54) **Bolzen mit einer Ausnehmung zur formschlüssigen Aufnahme einer Sechskantmutter**

(30) Priorität: 21.10.2002 DE 10249067
(71) Anmelder: Klüsserath, Daniel, 54498 Piesport (DE)
(72) Erfinder: Klüsserath, Daniel, 54498 Piesport (DE)
(74) Vertreter: Serwe, Karl-Heinz, Dipl.-Ing.

(57) **Zusammenfassung**

Bolzen (1) mit einer quer zu seiner Längsrichtung verlaufenden Ausnehmung (2) zur Verbindung mit einer Gewindestange.

Bislang werden derartige Bolzen dadurch hergestellt, dass sie aus einem zylindrischen Rundstab abgelängt werden, mit einer Querbohrung versehen werden, in die dann ein entsprechendes. Innengewinde eingeschnitten wird.

Zur Verringerung der Herstellungskosten wird vorgeschlagen, dass der Bolzen (1) als Gussteil ausgebildet ist und eine konzentrisch zur Ausnehmung (2) angeordnete topfförmige sechseckige Ausnehmung (3) zur formschlüssigen Aufnahme einer üblichen Sechskantmutter hat.

## Beschreibung

Die Erfindung betrifft einen Bolzen mit einer quer zu seiner Längsrichtung verlaufenden Ausnehmung zur Verbindung mit einer Gewindestange.

Derartige Bolzen werden z.B. in an der Unterseite von Bauwerken, Decken, Brücken od.dgl. angeordneten Halterungen eingesetzt, in denen sie um ihre Längsachse schwenkbar sind. Die Halterungen weisen eine langlochartige Ausnehmung auf, durch die eine Gewindestange mit ihrem einen Ende in die Querbohrung des Bolzens einschraubbar ist. Dadurch ist die Gewindestange in der Halterung gehalten, jedoch in Richtung der langlochartigen Ausnehmung verschwenkbar. Die Gewindestange trägt an ihrem anderen Ende beispielsweise eine Rohrabhängung od.dgl. Durch den stufenlos einstellbaren Winkel der Gewindestange ergibt sich eine Kraftübertragung ohne eine Durchbiegung der Gewindestange. Die Gewindestange kann auch mit entsprechenden Halterungen und Bolzen beispielsweise zur Versteifung von Diagonalverstrebungen eingesetzt werden.

Bislang werden derartige Bolzen dadurch hergestellt, dass sie aus einem zylindrischen Rundstab abgelängt werden, mit einer Querbohrung versehen werden, in die dann ein entsprechendes Innengewinde eingeschnitten wird.

Zur Verringerung der Herstellungskosten wird nunmehr vorgeschlagen, dass der Bolzen als Gussteil ausgebildet ist und eine konzentrisch zur Ausnehmung angeordnete topfförmige Ausnehmung zur formschlüssigen Aufnahme einer üblichen Sechskantmutter hat.

Vorteilhaft ist der Bolzen im Querschnitt zylinderförmig.

Bei einer bevorzugten Ausführungsform hat der Bolzen im Querschnitt die Form eines Kreisabschnittes. Vorzugsweise ist die Höhe des Kreisabschnittes größer als der Radius des Bolzens.

Vorzugsweise ist die Tiefe der topfförmigen Ausnehmung kleiner als die Dicke der Sechskantmutter.

Vorzugsweise ist der Bolzen im Gesenkschmiedeverfahren hergestellt.

Die Erfindung ist in den Zeichnungen beispielhaft dargestellt. Es zeigen:

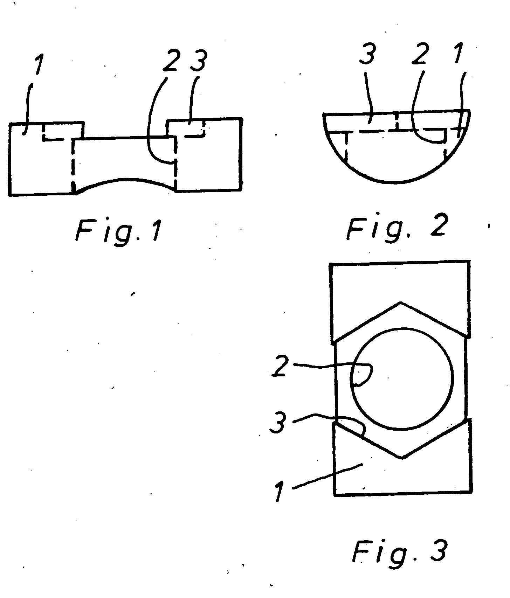

- Fig. 1: einen neuerungsgemäßen Bolzen in Seitenansicht,
- Fig. 2: den Bolzen nach Fig. 1 in Ansicht auf eine Stirnseite und
- Fig. 3: den Bolzen nach Fig. 1 in Draufsicht.

Nach den Figuren hat ein Bolzen 1 im Querschnitt die Form eines Kreisabschnittes. In dem Bolzen 1 ist eine quer zu seiner Längsrichtung verlaufende Ausnehmung 2 angeordnet, zu der eine topfförmige sechseckige Ausnehmung 3 konzentrisch angeordnet ist, die die Form einer üblichen Sechskantmutter hat.

Der Bolzen 1 ist einstückig als Gussteil ausgebildet. Er kann auch im Gesenkschmiedeverfahren hergestellt werden.

Bei der Verwendung des erfindungsgemäßen Bolzens 1 wird in die topfförmige Ausnehmung 3 eine übliche Sechskantmutter eingelegt, in die dann durch die Ausnehmung 2 eine nicht dargestellte Gewindestange eingeschraubt werden kann.

In der topfförmigen Ausnehmung 3 liegt die übliche Sechskantmutter auf dem Boden der topfförmigen Ausnehmung glatt auf und ist durch die topfförmige Ausnehmung verdrehsicher im Bolzen 1 gehalten. Durch die Ausbildung als Gussteil oder die Herstellung im Gesenkschmiedeverfahren ergibt sich eine erhebliche Kosteneinsparung bei der Herstellung des Bolzens 1.

Der Bolzen 1 kann auch zylinderförmig ausgebildet sein, sodass die topfförmige Ausnehmung 3 eine größere Tiefe aufweisen kann.

## Patentansprüche

1. Bolzen mit einer quer zu seiner Längsrichtung verlaufenden Ausnehmung zur Verbindung mit einer Gewindestange, **dadurch gekennzeichnet, dass** der Bolzen (1) einstückig als Gussteil ausgebildet ist und eine konzentrisch zur Ausnehmung (2) angeordnete topfförmige sechseckige Ausnehmung (3) zur formschlüssigen Aufnahme einer üblichen Sechskantmutter hat.

2. Bolzen nach Anspruch 1, **dadurch gekennzeichnet, dass** der Bolzen (1) im Querschnitt zylinderförmig ist.

3. Bolzen nach Anspruch 1, **dadurch gekennzeichnet, dass** der Bolzen (1) im Querschnitt die Form eines Kreisabschnittes hat.

4. Bolzen nach Anspruch 2, **dadurch gekennzeichnet, dass** die Höhe des Kreisabschnittes größer als der Radius des Bolzens ist.

5. Bolzen nach einem der Ansprüche 1 bis 4, **dadurch gekennzeichnet, dass** die Tiefe der topfförmigen Ausnehmung (3) kleiner als die Dicke der Sechskantmutter ist.

6. Bolzen nach einem der Ansprüche 1 bis 5, **dadurch gekennzeichnet, dass** der Bolzen (1) im Gesenkschmiedeverfahren hergestellt ist.
